# EUROPÄISCHE PATENTSCHRIFT

(11) **EP 3 834 001 B1**
(45) Veröffentlichungstag und Bekanntmachung des Hinweises auf die Patenterteilung: **03.09.2025**
(21) Anmeldenummer: 19832682.9
(22) Anmeldetag: 20.12.2019
(51) Int. Cl.: G01S 7/481, G01S 7/497, G01S 17/04, G01S 17/06, G01S 17/08, G01S 17/46, E03C 1/05, E03D 5/10, G01V 8/12, G01V 8/20

(54) **VORRICHTUNG ZUR ABSTANDSABHÄNGIGEN ERKENNUNG EINES MOBILEN OBJEKTES SOWIE VERFAHREN ZU DEREN BETRIEB**
APPARATUS FOR THE DISTANCE-DEPENDENT IDENTIFICATION OF A MOBILE OBJECT AND METHOD FOR THE OPERATION THEREOF
DISPOSITIF POUR LA DÉTECTION EN FONCTION DE LA DISTANCE D'UN OBJET MOBILE AINSI QUE PROCÉDÉ POUR SON FONCTIONNEMENT

(30) Priorität: 21.12.2018 DE 102018133312
(43) Veröffentlichungstag der Anmeldung: 16.06.2021
(73) Patentinhaber: Irlbacher Blickpunkt Glas GmbH, 92539 Schönsee (DE)
(72) Erfinder: IRLBACHER, Günther, 92539 Schönsee (DE); SCHARL, Dominik, 93464 Tiefenbach (DE)
(74) Vertreter: Patentanwaltskanzlei Hinkelmann
(86) Internationale Anmeldenummer: PCT/EP2019/086663
(87) Internationale Veröffentlichungsnummer: WO 2020/127961

(56) Entgegenhaltungen:
- EP-A1- 2 497 868
- AT-U1- 9 069
- JOHN FISHER: "Infrared Remote Control Receivers Vishay's TSSP4056 Sensor for Fast Proximity Sensing", 21 October 2015 (2015-10-21), pages 1 - 9, XP055680677, Retrieved from the Internet <URL:https://www.vishay.com/docs/82741/tssp4056sensor.pdf> [retrieved on 20200330]

## Beschreibung

Die Erfindung betrifft eine Vorrichtung zur abstandsabhängigen Erkennung eines mobilen Objektes mittels der Auswertung von reflektierter IR-Strahlung, umfassend eine Frontplatte mit einer ersten und einer zweiten Oberfläche sowie einer IR-Sensorvorrichtung, umfassend mindestens eine IR-Leuchtdiode und einen davon beabstandeten IR-Sensor, wobei die mindestens eine IR-Leuchtdiode eingerichtet ist, um IR-Strahlung in Richtung der ersten Oberfläche der Frontplatte und durch diese hindurch zu emittieren, und der IR-Sensor eingerichtet ist, um reflektierte IR-Strahlung durch die zweite Oberfläche der Frontplatte und durch diese hindurch zu detektieren, sowie eine IR-Auswertungsvorrichtung, welche eingerichtet ist, um die reflektierte IR-Strahlung in Hinblick auf die Anwesenheit eines mobilen Objektes auszuwerten, sowie ein Verfahren zu deren Betrieb.

Für die Bedienung von zahlreichen Geräten, z.B. Sanitär-, Industrie- und Haushaltsgeräten ist es in letzter Zeit zunehmend von Bedeutung, die Nähe von einer oder mehreren Personen vor einer Vorrichtung, die im Allgemeinen Schaltvorgänge auslösen kann, bzw. einem darin oder daran angebrachten geeigneten Sensor zu erkennen. Dabei ist es insbesondere auch von Bedeutung, den Abstand einer Person von dieser Vorrichtung zu bestimmen.

Die Objekterkennung und die Bestimmung eines Abstandes zwischen Objekt und Sensor erfolgt meistens über eine Anwendung von IR-Strahlung. Dabei wird die von einer Strahlungsquelle gesandte IR-Strahlung vom Objekt reflektiert und von einem Strahlungssensor die reflektierte IR-Strahlung ausgewertet. Die dabei verwendeten Sensoren befinden sich im Allgemeinen hinter einer Kunststoffabdeckung. Eine Abdeckung aus Glas oder Keramik wird im Allgemeinen nicht verwendet, weil bislang die Reichweite für Infrarotstrahlung begrenzt ist. Insbesondere wenn z.B. Glas mit einer Beschichtung versehen ist, kommt es häufig zu einer nachteiligen Absorption von IR-Strahlung. Bereits bekannte IR-Sensorsysteme können Objekte in einem Abstand größer als 1 m nur hinter transparenten Kunststoffen oder speziell (sichtbar) freigestellten Gläsern realisieren.

Vorzugsweise soll die Sensorik hinter keramisch weiß bedrucktem Glas funktionieren.

Es sind im Übrigen IR-Sensorsysteme ohne Entfernungsmessung bekannt. Bei diesen ist das IR-Sensorsystem so eingerichtet, dass es auf eine fest vorgegebene Entfernung eingestellt ist, bei der es reagiert, also die Anwesenheit von z.B. einer Person erkennt. Hierzu wird eine Bedruckung auf einer im Allgemeinen verwendeten Frontplatte entsprechend vorgenommen bzw. angepasst. Dies ist jedoch sehr aufwändig. Die Bedruckung muss in der Serienfertigung immer gleich sein, da Abweichungen einen signifikanten Einfluss auf die eingestellte bzw. einstellbare Entfernung haben. Dies kann jedoch nicht immer gewährleistet werden, so dass der Detektionsabstand in einer Serie nicht konstant gehalten werden kann.

Außerdem ist nur eine Entfernung einstellbar. Es kann also eine Person nur dann detektiert werden, wenn sie sich in diesem Abstand vom Sensorsystem befindet. Dies kann je nach Einbausituation auch dazu führen, dass die Sensorik permanent die Meldung "Objekt erkannt" zurückliefert, aber sich kein mobiles Objekt, z.B. eine Person, vor dem Sensor befindet.

Überdies ist es auch bekannt, eine Entfernungsmessung unter Anwendung des Triangulationsprinzips vorzunehmen. Hierzu werden entweder mehrere Infrarot-Leuchtdioden (LEDs) in unterschiedlichen Winkeln bezüglich einer Frontplatte angeordnet, oder es wird zwar nur eine IR-Leuchtdiode als Sender, d.h. als Strahlungsquelle, benutzt, aber dafür ein aufwändiger Array-IR-Sensor als Empfänger, d.h. Strahlungsdetektor, verwendet.

Diese Möglichkeiten haben jedoch den gemeinsamen Nachteil, dass die Reichweite der Sensoren hinter keramisch weiß bedrucktem Glas zu gering ist. Es sind keine Sensoren mit nennenswerten Reichweiten für die Verwendung hinter keramisch weiß bedrucktem Glas verfügbar.

Die Veröffentlichung DE 41 15 730 A beschreibt eine Anordnung zur Objektidentifikation, bestehend aus mindestens einer Abfrageeinrichtung und mindesten einem Datenträger, welcher jeweils zu identifizierenden Objekten zugeordnet ist, wobei die Abfrageeinrichtung einen impulsmodulierten Hochfrequenzsender enthält und im weiteren mit einem Empfänger ausgestattet ist, der mit einer Auswerteeinrichtung zur Feststellung von Identifikationsdaten zu den Objekten verbunden ist.

Die Veröffentlichung DE 197 00 836 C beschreibt einen optischen Sensorschalter, insbesondere für ein Glaskeramikkochfeld, mit einer Lichtquelle und einem lichtempfindlichen Signalsensor, der an eine Schaltung angeschlossen ist und von der Lichtquelle Licht empfängt, wobei die Schaltung ein Ausgangssignal erzeugt, wenn der Signalsensor Licht oberhalb eines vorgegebenen Schwellwertes empfängt, wobei ein erster Lichtleiter an die Lichtquelle und ein zweiter Lichtleiter an den Sensor angekoppelt ist und die freien Enden der beiden Lichtleiter so positioniert sind, dass vom ersten Lichtleiter austretendes Licht durch einen in die Nähe der freien Stirnseiten zu bringenden Körper in den zweiten Lichtleiter reflektiert und in diesem zum Signalsensor geführt wird, und wobei die Mantelflächen der Lichtleiter in eine stark strahlungsabsorbierende Ummantelung eingebettet sind.

Die österreichische Gebrauchsmusterschrift AT 009 069 U1 beschreibt eine Armatur, insbesondere eine Spülarmatur und Waschtischarmatur, mit mindestens einem Annäherungssensor, einer daran angeschlossenen oder integrierten Schalteinheit, an die eine Auslösevorrichtung angeschlossen ist, sowie mit einer Energieversorgung und einem Sichtfenster. Das Sichtfenster ist im Erfassungsbereich des Annäherungssensors angeordnet. Die Anwesenheit eines Objektes, vorzugsweise einer Person oder einer Hand, innerhalb des Abstands zwischen dem Objekt und der Armatur löst die Anzeige mindestens eines Symbols in Form eines alphanumerischen Textes, Piktogramms oder graphischen Schriftzuges in dem Sichtfenster aus.

Die Veröffentlichung DE 10 2009 013 735 A beschreibt einen Sensor für die Überwachung eines Überwachungsbereiches mit einer Sendeeinrichtung, die eine Strahlung, insbesondere elektromagnetische Strahlung mit einer Strahlleistung oder eine sonstige Welle, z.B. Schallwelle aussendet, wobei der Sensor in der Lage ist, Objekte im Überwachungsbereich zu detektieren, wobei der Sensor Mittel umfasst, mit welchen die auf einem detektierten Objekt aufgebrachte momentane und/oder durchschnittliche Leistung pro Fläche von auf dem Objekt auftreffender Energie, z.B. elektromagnetische Strahlung der Sendeeinrichtung, bestimmbar ist. Es sind zudem Anpassungsmittel vorgesehen, um bei der Detektion eines Objektes im Überwachungsbereich die momentane und/oder durchschnittliche Leistung pro Fläche von auf dem Objekt auftreffender Energie einen vorgegebenen Wert nicht überschreiten zu lassen. Der Sensor ist ausgebildet, zuerst mit einer vergleichsweise kleinen Leistung zu messen, die kein oder kein nennenswertes Gefährdungspotential für Personen erzeugen kann, ob sich Objekte in einem vorgegebenen nahen Bereich zur Sendeeinrichtung befinden. In Ausführungsformen benutzt der Sensor die Sendeeinrichtung für eine Distanzbestimmung zu einem Objekt. Außerdem kann der Sensor dazu ausgebildet sein, Personen von anderen Objekten unterscheiden zu können.

Die Veröffentlichung EP 2 208 831 A beschreibt ein Verfahren zur berührungslosen Steuerung einer sanitären Anlage, mit einem Sender, einem Empfänger, einer Auswerteeinheit sowie einer Steuereinheit, mit denen ein Raum der sanitären Anlage überwacht und wenigstens ein Aktor der sanitären Anlage gesteuert wird, wobei der Raum mittels einer Time-of-Flight-Entfernungsmessung überwacht wird. In einer Ausführungsform wird für die Entfernungsmessung ein gesendetes Infrarotsignal mit einem Signal in der Amplitude moduliert und die Phasenverschiebung des empfangenen Modulationssignals gegenüber dem gesendeten Signal gemessen.

Die Veröffentlichung WO 2009/095014 A1 beschreibt eine Vorrichtung zur Überwachung eines Raumvolumens, umfassend wenigstens zwei Matrix-Entfernungs-Mess-Sensoren mit einer Emittereinheit zum Aussenden von Strahlungsimpulsen sowie einer Mehrzahl von Sensoren zum Empfang von Reflexionen dieser Strahlungsimpulse, welche bezüglich des zu überwachenden Raumvolumens derart angeordnet sind, dass aufgrund der empfangenen Reflexionen jeweils Bildinformationen und ein zusätzliches, dreidimensionales Raumbild erstellbar sind, und eine Überdeckung des Raumvolumens von mehreren Seiten ermöglicht ist, wobei den zumindest zwei Matrix- Entfernungs-Mess-Sensoren eine Rechnerhardware und/oder Rechnersoftware zugeordnet ist, welche zur Digitalisierung von Kameradaten, sowie zur Erstellung eines Höhenprofils des zu überwachenden Raumvolumens über einer Referenzebene auf Basis dieser Sensordaten, ertüchtigt ist, wobei das erstellte Höhenprofil mithilfe der Rechnerhardware und/oder Rechnersoftware mit Standardmodellen, etwa einer Durchschnittsperson, vergleichbar ist.

Die Veröffentlichung WO 2009/156063 A1 beschreibt eine Infrarot-Empfängerschaltung zum Verarbeiten eines trägermodulierten Infrarotsignals, mit einer Verstärkerschaltung und einem Demodulator, wobei ein Komparator vorgesehen ist, der dazu ausgelegt ist, das Ausgabesignal der Verstärkerschaltung oder eines der Verstärkerschaltung nachgeschalteten Bandpassfilters durch Vergleich mit einem Schwellwert zu digitalisieren, um ein Pulsfolgensignal zu erzeugen. Die Empfängerschaltung umfasst eine Logikschaltung, die dazu ausgelegt ist, das Pulsfolgensignal des Komparators und das Ausgabesignal des Demodulators logisch miteinander zu verknüpfen, um aus dem Pulsfolgensignal ein dem Infrarotsignal entsprechendes zusätzliches Ausgabesignal zu extrahieren.

Die Veröffentlichung EP 2 497 867 A1 beschreibt eine Betätigungs- und Anzeigeplatte für eine Spüleinrichtung, wobei die Platte aus einem nicht leitfähigen transparenten Material besteht, wobei die Platte mindestens ein Sichtfenster aufweist und wobei hinter dem Sichtfenster angeordnet sind: mindestens eine Infrarotlichtquelle, mindestens ein auf Lichtreflektionsbasis arbeitender, für den Wellenlängenbereich der Infrarotlichtquelle empfindlicher Annäherungssensor, mit dem die Spüleinrichtung auslösbar ist, und mindestens eine Anzeigelichtquelle im Bereich des sichtbaren Lichts, wobei eine rückwärtige Beschichtung der Platte vorgesehen ist, die für den Bereich des sichtbaren Lichts eine Transmission im Bereich zwischen 1 und 15 % aufweist und die für den Bereich des nahen infraroten Lichts eine Transmission von mehr als 60 % aufweist. Die Betätigungs- und Anzeigeplatte ist insbesondere eine Glasplatte. Vorzugsweise weist die rückwärtige Beschichtung für den Bereich des nahen infraroten Lichts eine Transmission von mehr als 70 % auf.

Die Veröffentlichung DE 10 2012 210 851 A1 beschreibt ein Induktionskochgerät, aufweisend mindestens einen unterhalb einer Kochfeldplatte angeordneten IR-Sensor zum Detektieren von Infrarot-Licht eines auf der Kochfeldplatte abgesetzten Kochgeschirrs, wobei der IR-Sensor mit einem Kühlkörper thermisch verbunden ist. In der Beschreibung der Figuren ist erwähnt, dass die Kochfeldplatte für zumindest einen Teil des IR-Messspektrums des IR-Sensors durchlässig ist, so dass der IR-Sensor von einem Messfleck am Boden ausgehende IR-Strahlung abfühlen kann und daraus eine Temperatur des Bodens ableitbar ist.

Die Veröffentlichung DE 10 2013 207 785 A1 beschreibt eine Bedienvorrichtung für ein Haushaltsgerät, mit einem Bedienelement, welches an einer Bedienelementaufnahme des mit der Bedienvorrichtung steuerbaren Haushaltsgerätes mittels Magnetkraft haltbar ist und relativ zur Bedienelementaufnahme bewegbare und von dort abnehmbar positionierbar ist, und das Bedienelement einen Lichtleiter aufweist, welcher einen Lichteinkoppelbereich aufweist, der einem seitlichen Rand des Bedienelements ferner liegend angeordnet ist als ein Lichtauskoppelbereich des Lichtleiters. Die Bedienvorrichtung weist eine Infrarot-Sende-Empfangseinrichtung zur Auswahl einer Funktionsteileinheit des Haushaltsgeräts auf, die mit Sende-Empfangseinheiten unter dem Lichtleiter angeordnet und zur Detektion durch den Lichtleiter hindurch ausgebildet ist. In einer Ausführungsform weist das Bedienelement einen Boden auf, der zumindest an den Bereichen, an denen das Licht für den Lichtleiter einkoppelbar ist, und an den Bereichen, an denen die Sende-Empfangseinheiten durch den Lichtleiter detektieren, für Licht im für den Menschen sichtbaren Spektralbereich und für den Infrarotbereich durchlässig ist. Wesentlich ist, dass die Bedienvorrichtung eine Infrarot-Sende-Empfangseinrichtung zur Bestimmung der Position des Bedienelements aufweist.

Die Veröffentlichung DE 10 2014 201 636 A1 beschreibt ein Haushaltsgerätesystem, aufweisend mindestens ein Haushaltsgerät, mindestens einen ersten Raumüberwachungsdetektor und mindestens einen zweiten Raumüberwachungsdetektor zur berührungslosen Erkennung eines Objektes in der Nähe des mindestens einen Haushaltsgeräts, welche Raumüberwachungsdetektoren mit dem mindestens einen Haushaltsgerät gekoppelt sind, so dass mindestens eine Aktion mindestens eines Haushaltsgerätes auf der Grundlage des Erkennens mindestens eines Objektes auslösbar ist. Dabei hat ein erster Raumüberwachungsdetektor einen geringeren Energieverbrauch als ein zweiter Raumüberwachungsdetektor und das Haushaltsgerätesystem ist dazu eingerichtet, mindestens einen zweiten Raumüberwachungsdetektor zu aktivieren, wenn mindestens ein erster Raumüberwachungsdetektor ein Objekt erkannt hat. Erwähnt wird hierin außerdem, dass ein IR-Sensor nicht durch die üblicherweise bei Herden eingesetzten Gläser oder Kunststoffe von Herdfronten hindurch detektieren kann, weil diese im für IR-Sensoren wichtigen Wellenlängenbereich von etwa neun Mikrometer und höher nicht transparent sind.

Die Veröffentlichung DE 10 2015 011 386 A1 beschreibt ein Verfahren zum Betrieb einer Sanitäreinrichtung, umfassend zumindest die folgenden Schritte:
a) Festlegen von mehreren Zonen einer Umgebung der Sanitäreinrichtung;
b) Erfassen einer aktuellen Umgebungssituation mittels einer Sensoreinrichtung;
c) Festlegen einer Standard-Umgebungssituation;
d) Überwachen der mehreren Zonen mittels der Sensoreinrichtung;
e) Auslösen einer Aktion der Sanitäreinrichtung, wenn mit Schritt d) eine charakterisierbare Änderung der Umgebungssituation erfasst wird.

In Ausführungsformen umfasst die Sensoreinrichtung der DE 10 2015 011 386 A1 eine Mehrzahl von Lichtemittern, insbesondere Infrarot-LEDs, die mehrere Zonen der Umgebung der Sanitätseinrichtung separat erreichen kann, und mindestens einen Lichtempfänger. Die Sensoreinrichtung ist insbesondere eingerichtet, auf Grundlage der Messung der Laufzeit von Lichtimpulsen von Leuchtdioden (LED) im sichtbaren oder infraroten Spektrum die Position von Anwendern beziehungsweise Gegenständen in der Umgebung der Sanitäreinrichtung und bevorzugt auch deren Entfernung zur Sanitäreinrichtung beziehungsweise zur Sensoreinrichtung zu bestimmen.

Die Publikation "Infrared Remote Control Receivers Vishay's TSSP4056 Sensor for Fast Proximity Sensing" von John Fisher, 21. Oktober 2015, Seiten 1 bis 9, beschreibt einen IR-Sensor, der bei seiner maximalen Empfindlichkeit und bei benachbarten, geringeren Empfindlichkeiten betrieben wird, um eine verbesserte Messung des Abstands eines mobilen Objekts zu erreichen.

Aufgabe der Erfindung war es vor diesem Hintergrund, eine Vorrichtung zur abstandsabhängigen Erkennung eines mobilen Objektes, vorzugsweise von Personen, aber auch von Tieren usw., unter Verwendung einer IR-Sensorvorrichtung bereitzustellen. Vorzugsweise sollte eine verbesserte Messung des Abstands des mobilen Objektes von der Vorrichtung möglich sein. Dabei soll die Sensorik nicht nur hinter Kunststoffabdeckungen funktionieren, sondern auch hinter Keramik- bzw. Glasabdeckungen. Deren Aufbau soll vorzugsweise eine große Beständigkeit und somit einen großen Einsatzbereich ermöglichen und gleichzeitig einfach und kostengünstig herzustellen sein. Aufgabe der Erfindung war außerdem die Bereitstellung eines Verfahrens zum Betrieb einer solchen Vorrichtung.

Die Lösung dieser Aufgabe wird nach dieser Erfindung erreicht durch eine Vorrichtung zur abstandsabhängigen Erkennung eines mobilen Objektes sowie ein Verfahren zu ihrem Betrieb mit den Merkmalen der entsprechenden unabhängigen Patentansprüche. Bevorzugte Ausführungsformen der erfindungsgemäßen Vorrichtung sind in entsprechenden abhängigen Patentansprüchen aufgeführt. Bevorzugten Ausführungsformen der erfindungsgemäßen Vorrichtung entsprechen bevorzugte Ausführungsformen des erfindungsgemäßen Verfahrens und umgekehrt, selbst wenn dies hierin nicht explizit festgestellt wird.

Gegenstand der Erfindung ist somit eine Vorrichtung zur abstandsabhängigen Erkennung eines mobilen Objektes mittels der Auswertung von reflektierter IR-Strahlung, umfassend eine Frontplatte mit einer ersten und einer zweiten Oberfläche sowie einer IR-Sensorvorrichtung, umfassend mindestens eine IR-Leuchtdiode und einen davon beabstandeten IR-Sensor, wobei die mindestens eine IR-Leuchtdiode eingerichtet ist, um IR-Strahlung in Richtung der ersten Oberfläche der Frontplatte und durch diese hindurch zu emittieren, und der IR-Sensor eingerichtet ist, um reflektierte IR-Strahlung durch die zweite Oberfläche der Frontplatte und durch diese hindurch zu detektieren, sowie eine IR-Auswertungsvorrichtung, welche eingerichtet ist, um die reflektierte IR-Strahlung in Hinblick auf die Anwesenheit eines mobilen Objektes auszuwerten, wobei ein IR-Sensor verwendet wird, der bei einer bestimmten Arbeitsfrequenz fₒ eine maximale Empfindlichkeit hat, derart, dass die Empfindlichkeit bei Frequenzen f, die darüber oder darunter liegen, geringer ist, wobei die Arbeitsfrequenz f die Freequenz ist, mit der die IR-Leuchtdiode IR-Strahlung emittiert, und wobei als Frontplatte eine Glasscheibe verwendet wird, die auf der ersten und/oder zweiten Seite der Frontplatte zumindest teilweise mit einer lichtundurchlässigen, aber IR-durchlässigen keramischen Lackschicht beschichtet ist.

Ein mobiles Objekt im Sinne der vorliegenden Erfindung ist insbesondere ein Lebewesen oder ein Teil eines Lebewesens. Das mobile Objekt ist daher insbesondere auch eine Person oder ein Teil einer Person, z.B. eine Hand oder ein Fuß.

Die Arbeitsfrequenz f, die auch als Taktfrequenz bezeichnet wird, ist die Frequenz, mit der die IR-Leuchtdiode IR-Strahlung emittiert. Die Arbeitsfrequenz f ist somit zu unterscheiden von der Frequenz der IR-Strahlung an sich, die hierin als "IR-Frequenz" bezeichnet wird.

Bei der erfindungsgemäßen Vorrichtung ist die mindestens eine IR-Leuchtdiode vom IR-Sensor beabstandet. Dieser Abstand wird im Allgemeinen je nach Anwendungszweck bzw. Anwendungsort der Vorrichtung geeignet ausgewählt. Im Allgemeinen beträgt der Abstand zwischen IR-Leuchtdiode und IR-Sensor mindestens 1 cm.

Für den Fall, dass die Frontplatte eine mit einer Keramikfarbe beschichtete Glasplatte ist, insbesondere eine mit einer weißen Keramikfarbe beschichtete Glasplatte, beträgt der Abstand d_{LS} zwischen IR-Leuchtdiode und IR-Sensor vorzugsweise mindestens 4 cm und noch mehr bevorzugt mindestens 6 cm. Dies ist insbesondere vorteilhaft, wenn die Anwesenheit eines mobilen Objektes in einem Abstand d_{FO} zwischen der zweiten Oberfläche der Frontplatte und dem mobilen Objekt von 1 m oder mehr erkannt werden soll. Soll mit der erfindungsgemäßen Vorrichtung ein Abstand d_{FO} von bis zu 1,2 m festgestellt werden können, ist es bei Verwendung einer mit einer weißen Keramikfarbe beschichteten Glasplatte als Frontplatte vorteilhaft, wenn der Abstand d_{FO} mindestens 10 cm beträgt und vorzugsweise im Bereich von 12 bis 15 cm, insbesondere im Bereich von 13 bis 14 cm liegt.

Die Frontplatte ist erfindungsgemäß eine Glas Es können hierzu für IR-Strahlung nicht bedruckte oder bedruckte Glasscheiben verwendeten werden, solange diese für IR-Strahlung durchlässig sind. Überdies kann z.B. auch Parsol^{®} - Glas der Fa. Saint Gobain oder ein ähnliches Grauglas verwendet werden. Dieses Glas ist ein komplett durchgefärbtes Floatglas. Die erfindungsgemäß erreichbare Detektion eines Abstandes des mobilen Objektes wird neben den Eigenschaften des IR-Sensorsystems insbesondere auch von der IR-Durchlässigkeit der Frontplatte abhängen.

Die Frontplatte ist erfindungsgemäß eine ggf. beschichtete Glasplatte. Glas bietet eine gute Witterungsbeständigkeit und gewährleistet somit den Schutz der erfindungsgemäßen Vorrichtung. Außerdem ist Glas leicht zu reinigen, was den Einsatz auch in solchen Bereichen ermöglicht, in denen eine häufige Reinigung erforderlich ist, insbesondere auch in Bereichen, in denen es auf eine gute Hygiene ankommt. Weiterhin lassen sich auf Glas transparente und nicht-transparente Bereiche erzeugen, wobei transparente Bereiche insbesondere für eine Hinterlegung der Bedieneinheit mit einem Display vorteilhaft sind. Die Frontplatte hat im Allgemeinen eine Dicke von 1 bis 10 mm, vorzugsweise von 2 bis 5 mm, besonders bevorzugt von 3 bis 4 mm. Vorzugsweise wird für die Frontplatte ein im Floatverfahren hergestelltes Flachglas verwendet.

Weiterhin ist es erfindungsgemäß bevorzugt, dass die Frontplatte der Vorrichtung aus gehärtetem Einscheiben-Sicherheitsglas besteht. Dadurch wird eine kratzfeste Oberfläche und hohe mechanische Festigkeit erzielt. Außerdem dient dies dem Schutz der Vorrichtung. Somit ist eine Vielzahl von Einsatzmöglichkeiten möglich, die beispielsweise eine robuste Oberfläche der Vorrichtung erfordern.

In einer besonders bevorzugten Ausführungsform der Erfindung besteht die Frontplatte aus einer lichtundurchlässig ausgestalteten Glasscheibe. Hierbei ist es wiederum bevorzugt, dass die lichtundurchlässig ausgestaltete Glasscheibe eine Glasscheibe umfasst, die mit einer lichtundurchlässigen Beschichtung versehen ist oder die Lichtundurchlässigkeit durch ein vollständige Durchfärbung des Glases erreicht wird. Als lichtundurchlässige Beschichtung kann dabei eine organische oder keramische Beschichtung, letztere insbesondere bei Glasscheiben, verwendet werden, vorzugsweise als Bedruckung. Dies ermöglicht, dass das hinter der Frontplatte befindliche IR-Sensorsystem und ggf. weitere Bauteile wie eine IR-Auswertungsvorrichtung für einen Benutzer der Vorrichtung, insbesondere einer Person als einem Beispiel für ein mobiles Objekt, unsichtbar sind.

Die mindestens eine IR-Leuchtdiode und/oder der IR-Sensor können auf der Frontplatte oder einer zur Frontplatte beabstandeten zweiten Platte angebracht sein. Vorzugsweise sind die mindestens eine IR-Leuchtdiode und der IR-Sensor auf einer zur Frontplatte beabstandeten zweiten Platte angebracht. Die zweite Platte kann ebenfalls eine Kunststoff- oder vorzugsweise Glasplatte sein, aber beispielsweise auch eine Platine, die ggf. beispielsweise mit weiteren Bauteilen bestückt sein kann.

Auf der ersten Oberfläche der Frontplatte oder einer optional verwendeten zweiten Platte ist vorzugsweise die IR-Auswertungsvorrichtung angeordnet oder zumindest angeschlossen. Im Allgemeinen handelt es sich bei der ersten Oberfläche der Frontplatte um die dem Benutzer abgewandte Oberfläche der Frontplatte. Somit befindet sich die IR-Auswertungsvorrichtung vorzugsweise auf der dem Benutzer abgewandten Seite der Frontplatte.

Der Begriff "IR-Auswertungsvorrichtung" umfasst elektronische Bauteile, Leiterbahnstrukturen, Lötverbindungen und ggf. weitere Komponenten. Die IR-Auswertungsvorrichtung kann beispielsweise direkt auf der Frontplatte, auf einem Flex-Kabel oder auf einer separaten Leiterplatte angeordnet sein. Bei Verwendung einer separaten Leiterplatte als zweiter Platte kann diese wiederum auf der ersten Oberfläche der Frontplatte angeordnet sein. In diesem Fall weist die Leiterplatte eine erste und eine zweite Seite auf, wobei Leiterbahnstrukturen, Lötverbindungen und elektronische Bauteile, und ggf. auch weitere Komponenten auf der ersten Seite der Leiterplatte angeordnet sind. Dabei kann die Leiterplatte auch zwei oder mehr Lagen aufweisen.

Bei der erfindungsgemäßen Vorrichtung wird als Frontplatte eine Glasscheibe verwendet, die auf der ersten und/oder zweiten Seite der Frontplatte zumindest teilweise mit einer lichtundurchlässigen, aber IR-durchlässigen keramischen Lackschicht beschichtet ist. Dies hat den Vorteil, dass der Aufbau der Vorrichtung von einem Benutzer aus gesehen hinter der Frontplatte liegen kann und die Vorrichtung durch die Frontplatte optisch ansprechend gestaltet werden kann.

Besonders bevorzugt wird erfindungsgemäß eine keramisch bedruckte Glasplatte (Weißglas) als Frontplatte benutzt, da bei diesem Aufbau keine Freistellungen oder Farbunterschiede auf der Vorderseite sind. Die Dicke der Farbschicht kann dabei in Hinblick auf die gewünschten Eigenschaften der Vorrichtung gewählt werden. Dabei werden vorzugsweise keramische Siebdruckfarben verwendet. Keramische Siebdruckfarben bestehen aus Pigmenten, Glasfritten, d.h. Glaspartikeln mit einer bestimmten Korngrößenverteilung, und organischen Lösungsmitteln. Nach der Auftragung auf eine Glasplatte trocknen diese in einem ersten Schritt physikalisch durch Verdampfung des Lösungsmittels, wobei vorzugsweise ein Umlufttrockner bei einer Temperatur von weniger als 200 °C verwendet wird. In einem zweiten Schritt wird die getrocknete Farbschicht irreversibel mit der Glasplatte bei einer Temperatur von im Allgemeinen > 600 °C in einem thermischen Sinter- bzw. Emaillierungsprozess verschmolzen. Im Allgemeinen wird dabei gleichzeitig die Glasplatte zum Einscheibensicherheitsglas veredelt.

Neben keramischen Farben können für die Herstellung von Kontakten zwischen elektronischen Komponenten auf der Frontplatte und/oder einer optional vorhandenen zweiten Platte und damit auch von Leiterbahnen vorteilhaft auch keramische Leitpasten verwendet werden. Unter "keramischer Leitpaste" wird eine einbrennbare Paste verstanden, die in der Regel sowohl eine keramische Komponente als auch eine Metallkomponente enthält. Solche Pasten sind beispielsweise im Bereich der Dickschichttechnik (auch als "Dickfilmtechnik" bezeichnet) bekannt. Neben der keramischen Komponente und der Metallkomponente enthalten solche einbrennbaren Pasten in der Regel weitere Zusätze wie z.B. ein Lösungsmittel, beispielsweise mindestens ein Alkohol wie Terpineol, das die Rheologie der Paste beeinflusst. Dies ist insbesondere bei einem Aufbringen der Paste mit einem Druckprozess von Bedeutung. Bevorzugt beträgt in der einbrennbaren Paste der Anteil der keramischen Komponente 10 - 30 Gew.-%, der Anteil der Metallpartikel, die vorzugsweise eine Korngröße von nicht mehr als 15 µm aufweisen, dabei insbesondere Silberpartikel, 60 - 90 Gew.-%, bevorzugt 70 - 85 Gew.-%, und der Anteil an Lösungsmittel 5 - 10 Gew.-%, jeweils bezogen auf das Gesamtgewicht der Leitpaste. Die keramische Leitpaste kann niedrig- oder hochschmelzend sein. Als niedrigschmelzende Paste wird hierin eine Paste mit einem Schmelzpunkt von 500 - 600 °C, bevorzugt 500 - 540 °C, und als hochschmelzende Paste wird eine Paste mit einem Schmelzpunkt von 600 - 700 °C, bevorzugt von 650 - 680 °C, verwendet.

Die keramische Komponente der Leitpaste bewirkt deren Anhaftung zu einem Glassubstrat. So kann während des Einbrennens der Keramikanteil der auf das Substrat aufgetragenen keramischen Leitpaste mit der Oberfläche der Glasplatte verschmelzen, so dass auf diese Weise eine feste Verbindung der keramischen Leitpaste mit der Glasplatte entsteht. So wird eine besonders gute Anhaftung zu einem Glassubstrat erreicht. Zudem wird eine hohe Beständigkeit gegenüber Umwelteinflüssen wie z.B. UV-Strahlung und beispielsweise bei der Weiterverarbeitung verwendeten Klebstoffen ermöglicht.

Die keramische Komponente besteht hierbei im Allgemeinen aus anorganischen, nichtmetallischen Materialien, die in der Regel kristallin sind und metallische und nicht-metallische Elemente enthalten. Vorzugsweise ist die keramische Komponente Glasfritte. Ausdehnungskoeffizient und Schmelzbereich der Glasfritte sind vorteilhaft an das Trägersubstrat angepasst. Im Allgemeinen eignen sich als keramische Komponente besonders Metalloxide, Metallnitride, Metallcarbide oder eine Mischung dieser Materialien. Die keramische Komponente liegt in der Regel als Pulver oder als Dispergat vor.

Durch die Metallkomponente der Leitpaste wird eine möglichst hohe Leitfähigkeit der Leitpaste bereitgestellt. Dementsprechend sollte die Leitpaste gut leitende Materialien enthalten. Als Metallkomponente sind insbesondere Edelmetalle wie z.B. Silber, Gold, Platin und Palladium bevorzugt. Ganz besonders ist als keramische Leitpaste eine Silberleitpaste bevorzugt. Die genannten Edelmetalle können einzeln oder in Kombination verwendet werden. Auch Legierungen von Edelmetallen, beispielsweise aus Gold oder Silber mit Platin oder Palladium, können verwendet werden. Der Vorteil von Edelmetallen als Metallkomponente ist, dass diese nicht unter Schutzatmosphäre eingebrannt werden müssen. Darüber hinaus können auch Nichtedelmetalle als Metallkomponente verwendet werden, solange eine gute Leitfähigkeit und Beständigkeit gewährleistet sind. Auch diese Metalle können einzeln, in Kombination oder als Legierung, sowohl untereinander wie auch mit Edelmetallen eingesetzt werden. Bei Nichtedelmetall-enthaltenden Leitpasten sind solche, die Kupfer enthalten, bevorzugt.

In den keramischen Leitpasten beträgt der durchschnittliche Durchmesser der Metallpartikel im Allgemeinen nicht mehr als 15 µm, vorzugsweise von 1 bis 15 µm. Besonders bevorzugt weist die keramische Leitpaste Silberpartikel auf. In der eingebrannten keramischen Leitpaste sind die Metallpartikel im Allgemeinen derart miteinander in Kontakt, dass eine durchgehende elektrisch leitfähige Struktur vorliegt.

In einer weiteren bevorzugten Ausführungsform der erfindungsgemäßen Vorrichtung sind IR-Sensorvorrichtung und IR-Auswertungsvorrichtung ausgestaltet, um den Abstand eines mobilen Objektes zu bestimmen. Dabei sind IR-Sensorvorrichtung und IR-Auswertungsvorrichtung vorzugsweise ausgestaltet, um die bei mehreren Arbeitsfrequenzen f ermittelten IR-Sensorsignale in Hinblick auf den Abstand des mobilen Objektes auszuwerten. Schließlich ist es dabei auch bevorzugt, dass IR-Sensorvorrichtung und IR-Auswertungsvorrichtung ausgestaltet sind, um einen Abstand des mobilen Objektes von der zweiten Oberfläche der Frontplatte im Bereich von 0,1 bis 1,5 m durch Auswertung von IR-Sensorsignalen zu ermitteln, die bei Arbeitsfrequenzen f registriert wurden, für die das Verhältnis f/fₒ im Bereich von 0,25 bis 1 oder 1 bis 1,75 liegt.

In einer bevorzugten Ausführungsform der erfindungsgemäßen Vorrichtung enthält die IR-Sensorvorrichtung mehrere IR-Leuchtdioden, die IR-Strahlung verschiedener IR-Frequenzen emittieren.

Der IR-Sensor kann beispielsweise ein einzelner Sensor oder ein Arraysensor sein. Ein Arraysensor ermöglicht hierbei eine bessere ortabhängige Auswertung der registrierten reflektierten IR-Strahlung.

In einer weiteren bevorzugten Ausführungsform der Vorrichtung ist in einer Steuerungseinheit, z.B. einem Mikrokontroller, ein Zusammenhang hinterlegt zwischen Sensorsignalen des IR-Sensors für bestimmte Arbeitsfrequenzen f und dem Abstand des mobilen Objekts von der zweiten Oberfläche der Frontplatte.

Infrarot-Fernbedienungen können prinzipiell die Erkennung eines mobilen Objektes mittels Infrarot-Strahlung stören und ungewollte Auslösungen, d.h. Feststellungen der Anwesenheit eines mobilen Objektes, verursachen. In einer besonders bevorzugten Ausführungsform ist die erfindungsgemäße Vorrichtung daher ausgestaltet, mögliche Störungen durch eine Infrarot-Fernbedienung zu verhindern. Dies wird im Allgemeinen durch Verwendung einer geeignet ausgestalteten Software erreicht, mittels der Signale einer Infrarot-Fernbedienung erkannt und bei der Durchführung des erfindungsgemäßen Verfahrens berücksichtigt werden. Diese Software erkennt anhand der in IR-Fernbedienungssignalen enthaltenem Startbedingung, z.B. einem 50 ms High-Signal, ob es sich um das von der IR-Sensorvorrichtung der erfindungsgemäßen Vorrichtung ausgesendete Signal handelt, oder um ein IR-Fernbedienungssignal. Somit kann beispielsweise während einer IR-Fernbedienungs-Sequenz die Objekterkennung, d.h. die Erkennung der Anwesenheit und ggf. des Abstandes eines mobilen Objektes, kurzzeitig unterbrochen werden. Somit treten keine Störungen auf.

Gegenstand der Erfindung ist außerdem ein Verfahren zum Betrieb einer Vorrichtung zur abstandsabhängigen Erkennung eines mobilen Objektes mittels der Auswertung von reflektierter IR-Strahlung, umfassend eine Frontplatte mit einer ersten und einer zweiten Oberfläche sowie einer IR-Sensorvorrichtung, umfassend mindestens eine IR-Leuchtdiode und einen davon beabstandeten IR-Sensor, wobei die mindestens eine IR-Leuchtdiode eingerichtet ist, um IR-Strahlung in Richtung der ersten Oberfläche der Frontplatte und durch diese hindurch zu emittieren, und der IR-Sensor eingerichtet ist, um reflektierte IR-Strahlung durch die zweite Oberfläche der Frontplatte und durch diese hindurch zu detektieren, sowie eine IR-Auswertungsvorrichtung, welche eingerichtet ist, um die reflektierte IR-Strahlung in Hinblick auf die Anwesenheit eines mobilen Objektes auszuwerten, wobei ein IR-Sensor verwendet wird, der bei einer bestimmten Arbeitsfrequenz fₒ eine maximale Empfindlichkeit hat, derart, dass die Empfindlichkeit bei Frequenzen f, die darüber oder darunter liegen, geringer ist, wobei die Arbeitsfrequenz f die Frequenz ist, mit der die IR-Leuchtdiode (5) IR-Strahlung emittiert, und wobei als Frontplatte (1) eine Glasscheibe verwendet wird, die auf der ersten (2) und/oder zweiten (3) Seite der Frontplatte (1) zumindest teilweise mit einer lichtundurchlässigen, aber IR-durchlässigen keramischen Lackschicht beschichtet ist, und wobei die folgenden Schritte durchgeführt werden:
(a) Emittieren von IR-Strahlung der mindestens einen IR-Leuchtdiode in Richtung der ersten Oberfläche der Frontplatte und durch diese hindurch;
(b) Detektieren von reflektierter IR-Strahlung durch die zweite Oberfläche der Frontplatte und durch diese hindurch mittels des IR-Sensors; und
(c) Auswerten der reflektierten IR-Strahlung durch die IR-Auswertungsvorrichtung in Hinblick auf die Anwesenheit eines mobilen Objektes.

Beim erfindungsgemäßen Verfahren, für dessen Durchführung die erfindungsgemäße Vorrichtung insbesondere eingerichtet ist, steuert im Allgemeinen ein Mikrokontroller eine IR-LED an. Dabei wird die IR-LED vorzugsweise mit einem Tastverhältnis zwischen 40 und 60 %, beispielsweise mit einem Tastverhältnis von 50 %, und beispielsweise einer Frequenz f₀ , z.B. 56_kHz, ein und ausgeschaltet. Diese Ansteuerung kann z.B. kontinuierlich erfolgen. Soll eine maximale Empfindlichkeit und damit eine maximale Reichweite der Sensorvorrichtung erreicht werden, wird für die Ansteuerfrequenz f, d.h. Arbeitsfrequenz f, der IR LED die Frequenz_f = f₀ gewählt.

Anschließend daran wird im Allgemeinen, vorzugsweise nach einer kurzen Wartepause Δt im Bereich von 10 bis 30 ms zum Einschwingen des Systems, beispielsweise 20 ms, das analoge Signal des IR-Sensors mithilfe des im Mikrokontroller befindlichen Analog-Digitalwandlers (AD-Wandler) digitalisiert. Allerdings kann das analoge Signal beispielsweise auch vorher durch eine Analogschaltung in Hardware vorgefiltert werden, z.B. durch einen Tiefpassfilter aus einem Widerstand und einem Kondensator.

Ist das IR-Sensorsignal digitalisiert, wird es im Allgemeinen weiter ausgewertet. Hierzu kann beispielsweise das digitalisierte IR-Sensorsignal mithilfe eines digitalen Filters, z.B. einem Tiefpassfilter und/oder einem Bandpassfilter, aufgewertet werden. In der Regel wird anschließend das gefilterte IR-Sensorsignal hinsichtlich seiner Amplitude bewertet. Übersteigt die Amplitude des Signals einen vorgegebenen Wert, wird dieser Umstand als erkanntes mobiles Objekt im Erfassungsbereich gedeutet. Der vorgegebene Wert liegt vorzugsweise in einem Bereich von 40 bis 60 %, z.B. 50 %, des maximalen Amplitudenwertes.

Um hier Störungen zu vermeiden, kann dieses binäre Signal (Objekt erkannt oder kein Objekt erkannt) beispielsweise zusätzlich mit einem weiteren digitalen Filter oder einer entsprechenden Logik hinsichtlich dessen zeitlichen Verlauf bewertet werden. Kommt zum Beispiel nur für sehr kurze Zeit das Signal "Objekt erkannt" an und verschwindet sofort wieder, kann dies zum Beispiel durch ein Störsignal herbeigeführt worden sein. Blendet man wie eben erwähnt diese kurzen Impulse mit Hilfe eines digitalen Filters oder einer Funktionslogik aus, können falsche Ergebnisse vermieden werden.

Soll nun zusätzlich festgestellt werden, wie weit sich ein mobiles Objekt von der Sensorvorrichtung entfernt befindet, wird hier vorzugsweise die Arbeitsfrequenz f, mit der die IR-LED angesteuert wird, erhöht oder verringert. Anschließend wird wiederrum wie oben beschrieben das IR-Sensorsignal ausgewertet. Dies kann zum Beispiel sukzessive durchgeführt werden, bis kein mobiles Objekt mehr erkannt wird. Somit lässt sich herausfinden, an welcher Stelle sich das mobile Objekt befindet. Die zu verwendendten Frequenzen f für die Ansteuerung der IR-LED kann man zum Beispiel mithilfe einer "lookup table" (Umsetzungstabelle) bestimmten Abständen d_{FO} zuordnen. Diese "lookup table" kann zum Beispiel durch eine Versuchsreihe ermittelt werden. Diese Messung kann beliebig oft wiederholt werden, um zum Beispiel eine kontinuierliche Auswertung zu erreichen. Je nach gewünschter Anwendung der erfindungsgemäßen Vorrichtung kann man auch nur bestimmte Abstandsbereiche auswerten, so dass der Rechen- und Zeitaufwand im Mikrokontroller geringer ist.

Beim erfindungsgemäßen Verfahren wird anschließend an Schritt (c) im Allgemeinen in einem Schritt (d) ein Schaltvorgang ausgelöst. Hierbei kann es sich beispielsweise um das Einschalten von Licht, das Abspielen von Musik, das akustische oder optische Ausgeben einer Besetztmeldung oder von anderen Informationen, oder die Durchführung von Maßnahmen handeln, die eine von einer Person vermutlich auszuübende Handlung vorbereiten, z.B. Öffnen eines Schrankes oder Behälters usw., Bereitstellung eines Gerätes usw. Dabei kann die Art des Schaltvorganges auch auf den festgestellten Abstand der Person von der erfindungsgemäßen Person abgestimmt sein. Ggf. kann die Art des Schaltvorganges auch von der Uhrzeit abhängen.

Das erfindungsgemäße Verfahren sieht somit insbesondere vor, dass eine oder mehrere Infrarot-LEDs mit einer bestimmten Frequenz getaktet werden. D.h. Infrarotstrahlung wird mit einer bestimmten Frequenz ausgestrahlt. Der Infrarot-Sensor kann dieses getaktete Licht im Allgemeinen vom Tageslicht und anderen Störern unterscheiden und liefert ein dem rückgestrahlten Signalpegel analoges Ausgangssignal, das im Allgemeinen digitalisiert und per Software mit einem digitalen Filter geglättet wird. Übersteigt das gefilterte Signal einen vorgegebenen Pegel, so wird dieser Umstand für den jeweiligen Abstandsbereich als Information "Objekt erkannt" weitergegeben. Für die Abstandsbestimmung beim Verfahren ist außerdem wesentlich, dass die Taktfrequenz variiert wird und die erhaltenen Signale in Hinblick auf deren Abhängigkeit von der Taktfrequenz ausgewertet werden. Es wird hierbei insbesondere bei einer eingeschränkten Empfindlichkeit des Infrarot-Sensors, d.h. bei einer von einer Arbeitsfrequenz unterschiedlichen Taktfrequenz, gearbeitet.

In einer bevorzugten Ausführungsform dieses Verfahrens wird die IR-Sensorvorrichtung bei mehreren Arbeitsfrequenzen f betrieben und die bei mehreren Arbeitsfrequenzen f ermittelten IR-Sensorsignale werden in Hinblick auf den Abstand des mobilen Objektes ausgewertet.

Überdies ist erfindungsgemäß ein Verfahren bevorzugt, bei dem zur Messung eines Abstandes des mobilen Objektes von bis zu 0,8 m von der zweiten Oberfläche der Frontplatte die IR-Sensorvorrichtung mit einer verringerten Empfindlichkeit betrieben wird, indem die IR-Sensorvorrichtung mit einer Arbeitsfrequenz f betrieben wird, die 2 bis 10 % niedriger oder höher ist als fₒ. Besonders bevorzugt wird die IR-Sensorvorrichtung mit einer Arbeitsfrequenz f betrieben, die höher als fₒ ist. Es wurde gefunden, dass dann keine Oberschwingungen in das Maximum der Empfindlichkeit des Sensors fallen und somit keine unerwünschten Fehlauslösungen zustande kommen.

Für die Bestimmung der Anwesenheit und ggf. der Entfernung des mobilen Objektes von der erfindungsgemäßen Vorrichtung gibt es direkte und indirekte Möglichkeiten.

In einer bevorzugten Ausführungsform des erfindungsgemäßen Verfahrens wird zur Bestimmung der Anwesenheit und ggf. der Entfernung des mobilen Objektes die direkt vom mobilen Objekt reflektierte IR-Strahlung herangezogen.

In Ergänzung oder alternativ hierzu kann in einer weiteren Ausführungsform des erfindungsgemäßen Verfahrens zur Bestimmung der Anwesenheit und ggf. der Entfernung des mobilen Objektes die indirekt reflektierte IR-Strahlung von dem mobilen Objekt zuordenbaren immobilen Objekten herangezogen wird. Hierzu kann beispielsweise eine Tür oder ein anderes Objekt, z.B. ein Vorhang, herangezogen werden, dessen Bewegung ein Hinweis darauf ist, dass sich an dieser Stelle oder sehr nahe daran, das betreffende mobile Objekt befindet. Diese Ausführungsform des erfindungsgemäßen Verfahrens bzw. der dafür eingerichteten erfindungsgemäßen Vorrichtung ist insbesondere dann vorteilhaft, wenn die Vorrichtung in einem kleinen und/oder engen Raum eingesetzt wird, z.B. einem Raum mit 80 cm Breite und 2 m Länge.

Bei dieser Ausführungsform ist es vorteilhaft, wenn die Arbeitsfrequenz f, mit der die IR-LED angesteuert wird, auf einen der Anwendung entsprechenden Wert eingestellt wird, z.B. einer Frequenz f, die einer etwas verminderte Reichweite d_{FO} entspricht. Diese Arbeitsfrequenz kann beispielsweise 20 % über der Frequenz f₀ liegen. Anschließend wird wie in der oben erwähnten Ausführungsform, bei welcher die direkt vom mobilen Objekt reflektierte IR-Strahlung ausgewertet wird, das IR-Sensorsignal in der Regel nach einer kurzen Wartezeit mit dem Mikrokontroller digitalisiert. Dieses digitalisierte Signal kann zum Beispiel anschließend noch mit Hilfe eines digitalen Filters aufgewertet werden, z.B. einem Tiefpass oder einem Bandpassfilter. Das dadurch erhaltene Signal wird dann im Allgemeinen differenziert. Das heißt, es wird die Ableitung des Signals nach der Zeit gebildet und so die Änderung pro Zeit errechnet. Dies kann zum Beispiel mit Hilfe eines weiteren digitalen Filters erfolgen. Das erhaltene Signal wird hinsichtlich seiner Amplitude bewertet. Dieses Signal kann sowohl positiv als auch negativ sein. Erfindungsgemäß ist es bei dieser Ausführungsform bevorzugt, dass beide Richtungen berücksichtigt werden. Ändert sich das vorgefilterte Sensorsignal zum Beispiel um -30 % in einer Sekunde, dann kann dies zum Beispiel als "Türe im engen Raum wird geöffnet" interpretiert werden.

Auf diese Weise kann mittels der IR-Sensorvorrichtung vorteilhaft ein Bereich in einem engen Raum erfasst werden, der aufgrund der Raumgeometrie mit dem zuvor beschriebenen Verfahren nicht erfasst werden kann.

Die Art und Weise des Aufbringens einer vorzugsweise verwendeten einbrennbaren keramischen Farb- und/oder Leitpaste auf eine vorzugsweise verwendete Glasplatte als Frontplatte und/oder zweite Platte ist erfindungsgemäß nicht besonders eingeschränkt. Jedoch ist es bevorzugt, dass das Aufbringen mittels Siebdruck- oder Tintenstrahltechnik durchgeführt wird. Dies hat den Vorteil, dass kommerziell erhältliche einbrennbare keramische Farb- oder Leitpasten verwendet werden können, die in der Regel auf diese Verfahren abgestimmt sind. Besonders bevorzugt ist die Siebdrucktechnik, da es sich hierbei um ein effizientes und kostengünstiges Verfahren handelt, insbesondere auch hinsichtlich der Anlagentechnik und der auf Siebdruck abgestimmten keramischen Farb- und Leitpasten. Ist eine besonders hohe Auflösung gefordert, beispielsweise mit Strukturen unter 50 µm, ist die Tintenstrahltechnik bevorzugt, die im Gegensatz zum Siebdruck keine Masken erfordert und eine noch bessere Auflösung bietet.

Beim Aufbringen einer einbrennbaren keramischen Farb- oder Leitpaste kann bereits eine gewünschte Strukturierung vorgenommen werden, die beim anschließenden Einbrennen der keramischen Farb- oder Leitpaste fixiert werden kann.

Die Erfindung hat zahlreiche Vorteile. Die erfindungsgemäße Vorrichtung kann breit eingesetzt werden, nicht nur im Haushaltsbereich sondern auch in Fabriken und Krankenhäusern. Im Haushaltsbereich ist insbesondere eine Verwendung im Sanitärbereich vorteilhaft. Die Erfindung hat den Vorteil, dass automatisch arbeitende Schalter realisiert werden können, bei welchen eine IR-Sensorvorrichtung, d.h. IR-Leuchtdiode, und IR-Sensor, sich hinter Glas oder Glaskeramik befinden. Dabei ist es in Ausführungsformen auch möglich, dass sich die IR-Sensorvorrichtung hinter mit einer weißen Keramikfarbe beschichtetem Glas oder Glaskeramik befindet, so dass diese von außen nicht sichtbar ist. Die Erfindung ermöglicht es, dass unabhängig von den jeweiligen Lichtbedingungen in der Umgebung des IR-Sensors mobile Objekte in einem Abstand von im Allgemeinen bis zu 2 m erkannt werden können.

Die Erfindung hat überdies große Vorteile bei der Serienfertigung der erfindungsgemäßen Vorrichtung. Es ist nämlich nicht immer möglich, bei einer keramisch oder organisch bedruckten Frontplatte, z.B. einer Glasplatte, exakt die gleiche Durchlässigkeit für elektromagnetische Strahlung, insbesondere IR-Strahlung, zu erreichen. Hierzu müsste technisch sehr aufwändig in das Druckverfahren eingegriffen werden. Das erfindungsgemäße Verfahren sowie die erfindungsgemäße Vorrichtung bieten nun den großen Vorteil einer Kalibrierung der Vorrichtung bzw. ihrer IR-Sensorvorrichtung in einem Fertigungsprozess. Die fertig eingebaute IR-Sensorvorrichtung kann zum Beispiel auf einen Prüfaufbau aufgebracht werden, auf dem sich in einem definierten Abstand ein definiertes Objekt befindet. Eine Prüf-Software kann beispielsweise durch sukzessive Änderung eines Parameters, welcher im Allgemeinen die Sendefrequenz, mit der die IR-LED angesteuert wird, beeinflusst, im üblicherweise eingesetzten Mikrokontroller die Sensorvorrichtung kalibrieren. Somit können in einem Serienprodukt immer exakt die gleichen Reichweiten sichergestellt werden.

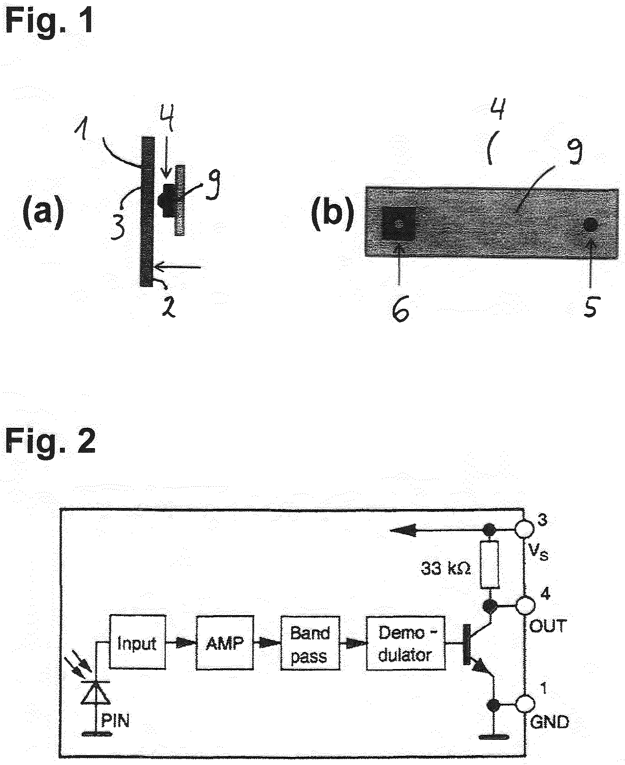

Die Erfindung wird im Folgenden anhand der Figuren 1 bis 5 weiter erläutert.

Fig. 1 zeigt erfindungswesentliche Teile einer nicht eingeschränkten Ausführungsform einer erfindungsgemäßen Vorrichtung zur abstandsabhängigen Erkennung eines mobilen Objektes mittels der Auswertung von reflektierter IR-Strahlung.

In Fig. 1 (a) ist in einer Seitenansicht gezeigt, wie sich hinter einer ersten Glasplatte 1 als Frontplatte auf einer zweiten Glasplatte 9 eine IR-Sensorvorrichtung 4 befindet. Die Sensorvorrichtung 4 befindet sich hierbei zwischen der ersten Oberfläche 2 der ersten Glasplatte 1 und der zweiten Glasplatte 9. Die zweite Oberfläche 3 der ersten Glasplatte 1 ist hierbei einer Person als mobilem Objekt zugewandt. Eine IR-Auswertungsvorrichtung und weitere elektronische Bauteile und Leitstrukturen sowie keramische Farbschichten sind hier weggelassen.

Eine oder mehrere Infrarot-LEDs auf der zweiten Glasplatte 9 werden mit einer bestimmten Frequenz als Arbeitsfrequenz f getaktet. Diese LEDs strahlen ihre Infrarot-Strahlung nach vorne in Pfeilrichtung durch eine hier nicht gezeigte keramische Bedruckung und die erste Glasplatte ab. Die Infrarot-LEDs können sich aber auch auf einer Leiterplatte befinden. Die IR-Strahlung tritt jedenfalls aus der Glasplatte 1 aus und breitet sich gerichtet im Raum vor der Vorrichtung aus. Befindet sich ein Objekt im Erfassungsbereich vor der Sensorik, d.h. in einem Abstand, in welchem die IR-Sensorvorrichtung eine Objekterkennung und Abstandsbestimmung vornehmen kann, wird das Infrarot-Licht reflektiert und wieder in Richtung der ersten Glasplatte und somit der IR-Sensorvorrichtung zurückreflektiert.

Fig. 1(b) zeigt in einer Vorderansicht die zweite Glasplatte 9 mit der IR-Sensorvorrichtung 4. Dabei sind der IR-Sensor 5 und der IR-Sensor 6 räumlich getrennt.

Als IR-Sensor 6 wird hier ein sogenannter Empfängerbaustein verwendet, der die ebenfalls getaktete reflektierte IR-Strahlung vom Tageslicht und anderen Störern unterscheiden kann und entsprechend dem rückgestrahlten Signalpegel ein analoges Ausgangssignal liefert. Hierzu wird in diesem nicht einschränkenden Beispiel ein Empfängerbaustein mit integrierten Filtern und Demodulator, z.B. der Sensor TSSP-6038 der Firma VISHAY, verwendet.

Als hier nicht gezeigte IR-Auswertungsvorrichtung wird beispielsweise ein Mikrokontroller wie folgt eingesetzt. Die auf den IR-Sensor 6 auftretende, beispielsweise vom mobilen Objekt reflektierte, IR-Strahlung wird als Ausgangssignal (Signal) von einem Mikrokontroller beispielsweise folgendermaßen ausgewertet: Das Signal wird mit einem AD-Wandler digitalisiert und per Software mit einem digitalen Filter aufgewertet, z.B. mithilfe eines Tiefpassfilters, der höhere Frequenzen und damit ungewünschte Störungen herausfiltert. Anschließend wird das gefilterte Signal in Amplitude und Zeitverhalten bewertet. Hierbei wird zunächst der Anstieg der Amplitude über einen bestimmten Schwellwert, z.B. über 50% der maximalen Signalamplitude, bewertet. Übersteigt das bereits gefilterte Signal diesen Schwellwert, wird für die aktuell eingestellte Sendefrequenz die Information "Objekt erkannt" an eine Funktionslogik weitergegeben.

Fig. 2 zeigt ein Blockschaltbild eines beispielsweise verwendbaren Sensors TSSP-6038 der Firma VISHAY.

Fig. 3 zeigt das Bandpassverhalten eines im Sinne der vorliegenden Erfindung verwendbaren IR-Sensors, z.B. eines Sensors TSSP-6038 der Firma VISHAY. Ein erfindungsgemäß verwendbarer IR-Sensor hat bei einer bestimmten Arbeitsfrequenz fₒ eine maximale Empfindlichkeit, so dass die Empfindlichkeit bei Frequenzen f, die darüber oder darunter liegen, geringer ist.

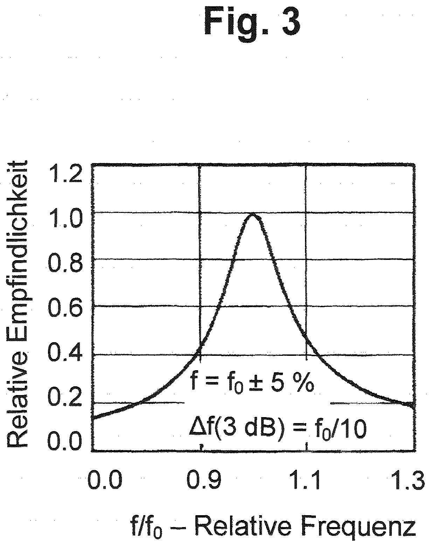

Um mit diesem IR-Sensor den Abstand, insbesondere verschiedene Abstandsbereiche, messen zu können, wird die Sendefrequenz, d.h. Arbeitsfrequenz, der IR-LEDs speziell gewählt, wobei das in Fig. 3 gezeigte typische Bandpass-Verhalten des IR-Sensors, d.h. Empfängerbausteins, ausgenutzt wird. Wie gezeigt, ist der IR-Sensor für eine bestimmte Arbeitsfrequenz ausgelegt. Beispielsweise der IR-Sensor TSSP-6038 auf 38kHz oder der IR-Sensor TSSP-6056 auf 56kHz. Es sind natürlich auch andere Empfängerbausteine möglich, da viele IR-Sensoren dieses typische Bandpassverhalten aufweisen. Durch die Verschiebung der Arbeitsfrequenz, d.h. durch Variation der Arbeitsfrequenz einer zugeordneten IR-Leuchtdiode, wird der Empfängerbaustein in seiner Empfindlichkeit eingeschränkt. Wird nämlich die Arbeits- bzw. Sendefrequenz der Infrarot-LEDs verringert oder vergrößert, so wird der Sensor unempfindlicher.

Zur Bestimmung des Abstandes eines mobilen Objektes kann wie folgt vorgegangen werden. Um in einem fernen Bereich (z.B. 1,2 m) ein mobiles Objekt, insbesondere eine Person, detektieren zu können, wird die Empfindlichkeit des IR-Sensors sehr hoch angesetzt. Dies wird erreicht, indem die Sendefrequenz der Infrarot-LED (IR-LED) nahe beim Empfindlichkeitsmaximum liegt (f ≈ f₀). Soll ein Objekt oder eine Person im Nahbereich (z.B. 0,2 m) erkannt werden, wird die Empfindlichkeit des IR-Sensors stark verringert. Dies wird erreicht, indem die Sendefrequenz der Infrarot-LED weit vom Empfindlichkeitsmaximum bei f₀ entfernt ist (z.B. f = 1,5 x f₀). Alle Entfernungen dazwischen können nach diesem Prinzip eingestellt werden. Somit können beliebig viele Zwischenbereiche erstellt und ausgewertet werden.

Für eine möglichst genaue Bestimmung des Abstands, sind vorzugsweise Messungen bei verschiedenen Abständen vorzunehmen. Anhand dieser Ergebnisse können dann z.B. Lookup-Table mit interpolierten Zwischenschritten erstellt werden. Diese Zusammenhänge können beispielsweise in der IR-Auswertungsvorrichtung, z.B. einem Mikrokontroller, geeignet hinterlegt sein. Mit diesen Werten für den Zusammenhang zwischen Arbeitsfrequenz und Abstand arbeitet dann der Mikrokontroller. Es kann somit anhand dieses Zusammenhanges der Abstand eines Objektes vor dem IR-Sensor prinzipiell durch sukzessives Verändern der Arbeitsfrequenz bestimmt werden. Anschließend kann dann beispielsweise errechnet werden, in welchem Teilbereich vor der erfindungsgemäßen Vorrichtung sich das Objekt befindet. Dabei sind nahezu beliebig viele Zwischenschritte realisierbar (z.B. 5 cm-Schritte).

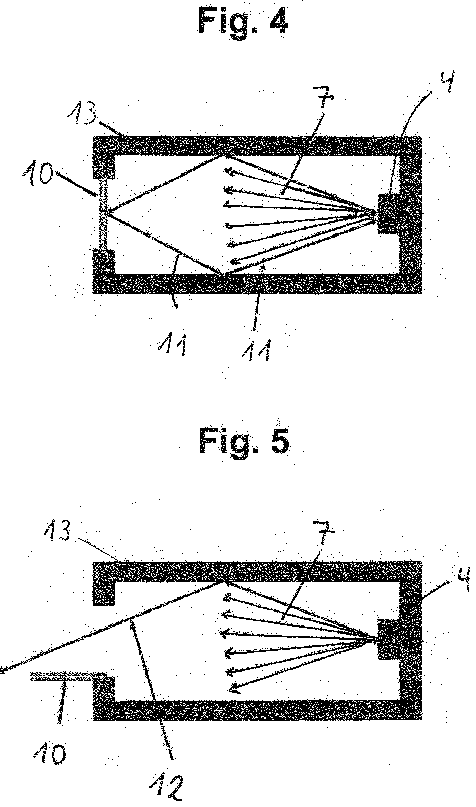

Die Figuren 4 und 5 zeigen die Funktionsweise einer Ausführungsform der erfindungsgemäßen Vorrichtung, die insbesondere für enge und/oder kleine Räume geeignet ist. Fig. 4 zeigt dabei die Situation für eine geschlossene Tür 10 und Fig. 5 die Situation für eine geöffnete Tür 10. 7 bedeutet die von einer IR-LED abgestrahlte IR-Strahlung, während 11 die von der Tür 7 bzw. Wänden 13 reflektierte IR-Strahlung bedeutet.

Wird die erfindungsgemäße Vorrichtung in einem engen / kleinen Raum eingesetzt, tritt nämlich für die Verwendung der IR-Sensorvorrichtung zusätzlich das Problem auf, dass bereits die Wände 13 und die Tür 10 IR-Strahlung stark reflektieren und damit das Sensorsignal das IR-Sensors bestimmen. Weil der Abstrahlwinkel von Infrarot-LEDs im Allgemeinen nicht 0° beträgt, wird dieser Effekt je nach Infrarot-LED und Bedruckungsfarbe, z.B. bei einer Glasplatte als Frontplatte, unterschiedlich auftreten. Wenn dieser Effekt auftritt, wäre mit der oben beschriebenen bevorzugten Vorgehensweise ein großer Erfassungsbereich, d.h. ein breiter Abstandsbereich für die Erfassung eines mobilen Objektes, nicht möglich. Diesem Problem kann allerdings erfindungsgemäß dadurch abgeholfen werden, dass das Zeit- und Amplitudenverhalten des Sensorsignals des IR-Sensors anders bewertet wird. Hierfür wird die Änderung des Sensorsignals pro Zeiteinheit (Ableitung des Zeitverhaltens) generiert. Dieses Signal wird sowohl in Hinblick auf positive als auch negative Veränderungen bewertet.

Ist die erfindungsgemäße Vorrichtung beispielsweise wie in Fig. 4 gezeigt in einem engen Raum mit einer Tür 10, liefert der Raum im Fernbereich durch die Reflektion der IR-Strahlung an Wänden 13 und Tür 10 bereits ein Sensorsignal an die IR-Sensorvorrichtung 4, insbesondere deren IR-Sensor. Wird die Tür 10 wie in Fig. 5 gezeigt nun geöffnet, verringert sich die Reflektion der IR-Strahlung, die vom Raum auf den IR-Sensor zurückgeworfen wird. Stattdessen wird ein großer Teil als IR-Strahlung 12 den Raum verlassen. Diese negativ verlaufende Änderung des Sensorsignals kann somit als Erfassung eines bewegten Objektes im Fernbereich angenommen werden. Somit kann die Information "Objekt erkannt" weitergegeben werden. Jedenfalls kann durch Auswertung des Zeit- und Amplitudenverhaltens der vom IR-Sensor registrierten reflektierten IR-Strahlung auf die Anwesenheit z.B. einer Person bereits aus einer größeren Entfernung als bei normaler Auswertemethode geschlossen werden. Somit sind größere Reichweiten auch in engen / kleinen Räumen realisierbar.

### Bezugszeichenliste

- 1: Frontplatte
- 2: Erste Oberfläche der Frontplatte, einem mobilen Objekt, z.B. einer Person abgewandt
- 3: Zweite Oberfläche der Frontplatte
- 4: IR-Sensorvorrichtung
- 5: IR-Leuchtdiode, Infrarot-Leuchtdiode (LED)
- 6: IR-Sensor
- 7: Emittierte IR-Strahlung (von der IR-Leuchtdiode)
- 8: Reflektierte IR-Strahlung
- 9: Zweite Platte
- 10: Tür
- 11: Indirekt reflektierte, vom IR-Sensor registrierte IR-Strahlung
- 12: Indirekt reflektierte, vom IR-Sensor nicht registrierte IR-Strahlung
- 13: Wand

## Patentansprüche

1. Vorrichtung zur abstandsabhängigen Erkennung eines mobilen Objektes mittels der Auswertung von reflektierter Infrarotstrahlung, IR-Strahlung (8), umfassend eine Frontplatte (1) mit einer ersten (2) und einer zweiten Oberfläche (3) sowie einer IR-Sensorvorrichtung (4), umfassend mindestens eine IR-Leuchtdiode (5) und einen davon beabstandeten IR-Sensor (6), wobei die mindestens eine IR-Leuchtdiode (5) eingerichtet ist, um IR-Strahlung (7) in Richtung der ersten Oberfläche (2) der Frontplatte (1) und durch diese hindurch zu emittieren, und der IR-Sensor (6) eingerichtet ist, um reflektierte IR-Strahlung (8) durch die zweite Oberfläche (3) der Frontplatte (1) und durch diese hindurch zu detektieren, sowie eine IR-Auswertungsvorrichtung, welche eingerichtet ist, um die reflektierte IR-Strahlung (8) in Hinblick auf die Anwesenheit eines mobilen Objektes auszuwerten, **dadurch gekennzeichnet, dass** als IR-Sensor (6) ein IR-Sensor (6) verwendet wird, der bei einer bestimmten Arbeitsfrequenz fₒ eine maximale Empfindlichkeit hat, derart, dass die Empfindlichkeit bei Frequenzen f, die darüber oder darunter liegen, geringer ist, wobei die Arbeitsfrequenz f die Frequenz ist, mit der die IR-Leuchtdiode (5) IR-Strahlung emittiert, und wobei als Frontplatte (1) eine Glasscheibe verwendet wird, die auf der ersten (2) und/oder zweiten (3) Seite der Frontplatte (1) zumindest teilweise mit einer lichtundurchlässigen, aber IR-durchlässigen keramischen Lackschicht beschichtet ist.

2. Vorrichtung nach Anspruch 1, **dadurch gekennzeichnet, dass** die mindestens eine IR-Leuchtdiode (5) und der IR-Sensor (6) auf einer zur Frontplatte beabstandeten zweiten Platte (9) angebracht sind.

3. Vorrichtung nach Anspruch 1 oder 2, **dadurch gekennzeichnet, dass** die Frontplatte (1) aus einer lichtundurchlässig ausgestalteten Glasscheibe besteht.

4. Vorrichtung nach Anspruch 3, **dadurch gekennzeichnet, dass** die lichtundurchlässig ausgestaltete Glasscheibe (1) eine Glasscheibe umfasst, die mit einer lichtundurchlässigen Beschichtung versehen ist.

5. Vorrichtung nach einem der Ansprüche 1 bis 4, **dadurch gekennzeichnet, dass** IR-Sensorvorrichtung (4) und IR-Auswertungsvorrichtung ausgestaltet sind, um den Abstand eines mobilen Objektes zu bestimmen.

6. Vorrichtung nach Anspruch 5, **dadurch gekennzeichnet, dass** IR-Sensorvorrichtung (4) und IR-Auswertungsvorrichtung ausgestaltet sind, um die bei mehreren Arbeitsfrequenzen f ermittelten IR-Sensorsignale in Hinblick auf den Abstand des mobilen Objektes auszuwerten.

7. Vorrichtung nach Anspruch 6, **dadurch gekennzeichnet, dass** IR-Sensorvorrichtung (4) und IR-Auswertungsvorrichtung ausgestaltet sind, um einen Abstand des mobilen Objektes von der zweiten Oberfläche (3) der Frontplatte im Bereich von 0,1 bis 1,5 m durch Auswertung von IR-Sensorsignalen zu ermitteln, die bei Arbeitsfrequenzen f registriert wurden, für die das Verhältnis f/fₒ im Bereich von 0,25 bis 1 oder 1 bis 1,75 liegt.

8. Vorrichtung nach einem der Ansprüche 1 bis 7, **dadurch gekennzeichnet, dass** die IR-Sensorvorrichtung (4) mehrere IR-Leuchtdioden (5) enthält, die IR-Strahlung verschiedener IR-Frequenzen emittieren.

9. Vorrichtung nach einem der Ansprüche 1 bis 8, **dadurch gekennzeichnet, dass** in einer Steuerungseinheit ein Zusammenhang hinterlegt ist zwischen Sensorsignalen des IR-Sensors (6) für bestimmte Arbeitsfrequenzen f und dem Abstand des mobilen Objekts von der zweiten Oberfläche (3) der Frontplatte (1).

10. Verfahren zum Betrieb einer Vorrichtung zur abstandsabhängigen Erkennung eines mobilen Objektes mittels der Auswertung von reflektierter Infrarotstrahlung, IR-Strahlung (8), umfassend eine Frontplatte (1) mit einer ersten (2) und einer zweiten Oberfläche (3) sowie einer IR-Sensorvorrichtung (4), umfassend mindestens eine IR-Leuchtdiode (5) und einen davon beabstandeten IR-Sensor (6), wobei die mindestens eine IR-Leuchtdiode (5) eingerichtet ist, um IR-Strahlung (7) in Richtung der ersten Oberfläche (2) der Frontplatte (1) und durch diese hindurch zu emittieren, und der IR-Sensor (6) eingerichtet ist, um reflektierte IR-Strahlung (8) durch die zweite Oberfläche (3) der Frontplatte (1) und durch diese hindurch zu detektieren, sowie eine IR-Auswertungsvorrichtung, welche eingerichtet ist, um die reflektierte IR-Strahlung (8) in Hinblick auf die Anwesenheit eines mobilen Objektes auszuwerten, wobei ein IR-Sensor (6) verwendet wird, der bei einer bestimmten Arbeitsfrequenz fₒ eine maximale Empfindlichkeit hat, derart, dass die Empfindlichkeit bei Frequenzen f, die darüber oder darunter liegen, geringer ist, wobei die Arbeitsfrequenz f die Frequenz ist, mit der die IR-Leuchtdiode (5) IR-Strahlung emittiert, und wobei als Frontplatte (1) eine Glasscheibe verwendet wird, die auf der ersten (2) und/oder zweiten (3) Seite der Frontplatte (1) zumindest teilweise mit einer lichtundurchlässigen, aber IR-durchlässigen keramischen Lackschicht beschichtet ist, und wobei im Verfahren die folgenden Schritte durchgeführt werden:
(a) Emittieren von IR-Strahlung (7) der mindestens einen IR-Leuchtdiode (5) in Richtung der ersten Oberfläche (2) der Frontplatte (1) und durch diese hindurch;
(b) Detektieren von reflektierter IR-Strahlung (8) durch die zweite Oberfläche (3) der Frontplatte (1) und durch diese hindurch mittels des IR-Sensors; und
(c) Auswerten der reflektierten IR-Strahlung (8) durch die IR-Auswertungsvorrichtung in Hinblick auf die Anwesenheit eines mobilen Objektes.

11. Verfahren nach Anspruch 10, **dadurch gekennzeichnet, dass** die IR-Sensorvorrichtung (4) bei mehreren Arbeitsfrequenzen f betrieben wird und die bei mehreren Arbeitsfrequenzen f ermittelten IR-Sensorsignale in Hinblick auf den Abstand des mobilen Objektes ausgewertet werden.

12. Verfahren nach Anspruch 10 oder 11, **dadurch gekennzeichnet, dass** zur Messung eines Abstandes des mobilen Objektes von bis zu 0,8 m von der zweiten Oberfläche (3) der Frontplatte (1) die IR-Sensorvorrichtung (4) mit einer verringerten Empfindlichkeit betrieben wird, indem die IR-Sensorvorrichtung (4) mit einer Arbeitsfrequenz f betrieben wird, die 2 bis 10 % niedriger oder höher ist als fₒ.

13. Verfahren nach einem der Ansprüche 10 bis 12, **dadurch gekennzeichnet, dass** zur Bestimmung der Anwesenheit und ggf. der Entfernung des mobilen Objektes die direkt vom mobilen Objekt reflektierte IR-Strahlung (8) herangezogen wird.

14. Verfahren nach einem der Ansprüche 10 bis 13 **dadurch gekennzeichnet, dass** zur Bestimmung der Anwesenheit und ggf. der Entfernung des mobilen Objektes die indirekt reflektierte IR-Strahlung (11) von dem mobilen Objekt zuordenbaren immobilen Objekten (9,10) herangezogen wird.

## Claims

1. Apparatus for the distance-dependent detection of a mobile object by evaluating reflected infrared radiation, IR radiation (8), comprising a front plate (1) with a first (2) and a second surface (3) and an IR sensor device (4), comprising at least one IR light-emitting diode (5) and an IR sensor (6) spaced apart therefrom, wherein the at least one IR light-emitting diode (5) is arranged to emit IR radiation (7) in the direction of the first surface (2) of the front plate (1) and through it, and the IR sensor (6) is set up to detect reflected IR radiation (8) through the second surface (3) of the front panel (1) and through it, as well as an IR evaluation device, which is set up to evaluate the reflected IR radiation (8) with regard to the presence of a mobile object, **characterized in that** an IR sensor (6) is used as the IR sensor (6), which has maximum sensitivity at a specific operating frequency fₒ, such that the sensitivity at frequencies f above or below this is lower, wherein the operating frequency f is the frequency at which the IR light-emitting diode (5) emits IR radiation, and wherein a glass pane is used as the front plate (1), which is at least partially coated on the first (2) and/or second (3) side of the front plate (1) with an opaque but IR-permeable ceramic lacquer layer.

2. Apparatus according to claim 1, **characterized in that** the at least one IR light-emitting diode (5) and the IR sensor (6) are mounted on a second plate (9) spaced apart from the front plate.

3. Apparatus according to claim 1 or 2, **characterized in that** the front panel (1) consists of an opaque glass pane.

4. Apparatus according to claim 3, **characterized in that** the opaque glass pane (1) comprises a glass pane provided with an opaque coating.

5. Apparatus according to one of claims 1 to 4, **characterized in that** the IR sensor device (4) and the IR evaluation device are designed to determine the distance of a mobile object.

6. Apparatus according to claim 5, **characterized in that** the IR sensor device (4) and IR evaluation device are designed to evaluate the IR sensor signals determined at several operating frequencies f with regard to the distance of the mobile object.

7. Apparatus according to claim 6, **characterized in that** the IR sensor device (4) and IR evaluation device are designed to determine a distance of the mobile object from the second surface (3) of the front panel in the range from 0.1 to 1.5 m by evaluating IR sensor signals that were registered at operating frequencies f for which the ratio f/fₒ is in the range from 0.25 to 1 or 1 to 1.75.

8. Apparatus according to one of claims 1 to 7, **characterized in that** the IR sensor device (4) contains several IR light-emitting diodes (5) that emit IR radiation of different IR frequencies.

9. Apparatus according to one of claims 1 to 8, **characterized in that** a correlation between sensor signals of the IR sensor (6) for certain operating frequencies f and the distance of the mobile object from the second surface (3) of the front panel (1) is stored in a control unit.

10. Method for operating an apparatus for distance-dependent detection of a mobile object by evaluating reflected infrared radiation, IR radiation (8), comprising a front plate (1) with a first (2) and a second surface (3) and an IR sensor device (4), comprising at least one IR light-emitting diode (5) and an IR sensor (6) spaced apart therefrom, wherein the at least one IR light-emitting diode (5) is arranged to emit IR radiation (7) in the direction of the first surface (2) of the front plate (1) and through it, and the IR sensor (6) is arranged to detect reflected IR radiation (8) through the second surface (3) of the front plate (1) and through it, and an IR evaluation device which is designed to evaluate the reflected IR radiation (8) with regard to the presence of a mobile object, wherein an IR sensor (6) is used which has maximum sensitivity at a specific operating frequency fₒ, such that the sensitivity at frequencies f above or below this is lower, wherein the operating frequency f is the frequency at which the IR light-emitting diode (5) emits IR radiation, and wherein a glass pane is used as the front plate (1), which is coated on the first (2) and/or second (3) side of the front plate (1) is at least partially coated with an opaque but IR-transparent ceramic lacquer layer, and wherein the following steps are carried out in the method:
(a) emitting IR radiation (7) from the at least one IR light-emitting diode (5) in the direction of the first surface (2) of the front panel (1) and through it;
(b) detecting reflected IR radiation (8) by the second surface (3) of the front panel (1) and through it by means of the IR sensor; and
(c) evaluating the reflected IR radiation (8) by the IR evaluation device with regard to the presence of a mobile object.

11. Method according to claim 10, **characterized in that** the IR sensor device (4) is operated at several operating frequencies f and the IR sensor signals determined at several operating frequencies f are evaluated with regard to the distance of the mobile object.

12. Method according to claim 10 or 11, **characterized in that**, in order to measure a distance of the mobile object of up to 0.8 m from the second surface (3) of the front panel (1), the IR sensor device (4) is operated with reduced sensitivity by operating the IR sensor device (4) at an operating frequency f that is 2 to 10% lower or higher than fₒ.

13. Method according to one of claims 10 to 12, **characterized in that** the IR radiation (8) reflected directly from the mobile object is used to determine the presence and, if applicable, the distance of the mobile object.

14. Method according to one of claims 10 to 13, **characterized in that** the indirectly reflected IR radiation (11) from immobile objects (9, 10) assignable to the mobile object is used to determine the presence and, if applicable, the distance of the mobile object.

## Revendications

1. Dispositif pour la détection d'un objet mobile en fonction de la distance au moyen de l'évaluation du rayonnement infrarouge réfléchi, rayonnement IR (8), comprenant une plaque frontale (1) avec une première (2) et une deuxième surface (3) ainsi qu'un dispositif capteur IR (4), comprenant au moins une diode électroluminescente IR (5) et un capteur IR (6) espacé de celle-ci, la au moins une diode électroluminescente IR (5) étant conçue pour émettre un rayonnement IR (7) en direction de la première surface (2) de la plaque frontale (1) et à travers celle-ci, et le capteur IR (6) étant conçu pour détecter le rayonnement IR réfléchi (8) à travers la deuxième surface (3) de la plaque frontale (1) et à travers celle-ci, ainsi qu'un dispositif d'évaluation IR qui est conçu pour évaluer le rayonnement IR réfléchi (8) en vue de la présence d'un objet mobile, **caractérisé en ce qu'**on utilise comme capteur IR (6) un capteur IR (6) qui a une sensibilité maximale à une fréquence de travail fₒ donnée, de telle sorte que la sensibilité est plus faible à des fréquences f supérieures ou inférieures à celle-ci, la fréquence de travail f étant la fréquence à laquelle la diode électroluminescente IR (5) émet un rayonnement infrarouge, et dans lequel on utilise comme plaque frontale (1) une vitre qui est recouverte au moins partiellement, sur le premiere (2) et/ou la deuxième (3) surface de la plaque frontale (1), d'une couche de vernis céramique opaque mais perméable aux infrarouges.

2. Dispositif selon la revendication 1, **caractérisé en ce que** la au moins une diode électroluminescente IR (5) et le capteur IR (6) sont montés sur une deuxième plaque (9) espacée de la plaque frontale.

3. Dispositif selon la revendication 1 ou 2, **caractérisé en ce que** la plaque frontale (1) est constituée d'une vitre opaque.

4. Dispositif selon la revendication 3, **caractérisé en ce que** la vitre opaque (1) comprend une vitre pourvue d'un revêtement opaque.

5. Dispositif selon l'une des revendications 1 à 4, **caractérisé en ce que** le dispositif à capteur IR (4) et le dispositif d'évaluation IR sont conçus pour déterminer la distance d'un objet mobile.

6. Dispositif selon la revendication 5, **caractérisé en ce que** le dispositif à capteur IR (4) et le dispositif d'évaluation IR sont conçus pour évaluer les signaux du capteur IR déterminés à plusieurs fréquences de travail f en fonction de la distance de l'objet mobile.

7. Dispositif selon la revendication 6, **caractérisé en ce que** le dispositif à capteur IR (4) et le dispositif d'évaluation IR sont conçus pour déterminer une distance de l'objet mobile par rapport à la deuxième surface (3) de la plaque frontale dans une plage de 0,1 à 1,5 m en évaluant les signaux du capteur IR qui ont été enregistrés à des fréquences de travail f pour lesquelles le rapport f/fₒ est compris entre 0,25 et 1 ou entre 1 et 1,75.

8. Dispositif selon l'une des revendications 1 à 7, **caractérisé en ce que** le dispositif de capteur IR (4) comprend plusieurs diodes électroluminescentes IR (5) qui émettent un rayonnement IR de différentes fréquences IR.

9. Dispositif selon l'une des revendications 1 à 8, **caractérisé en ce qu'**une relation est enregistrée dans une unité de commande entre les signaux du capteur IR (6) pour certaines fréquences de travail f et la distance entre l'objet mobile et la deuxième surface (3) de la plaque frontale (1).

10. Procédé pour faire fonctionner un dispositif destiné à détecter un objet mobile en fonction de la distance au moyen de l'évaluation du rayonnement infrarouge réfléchi, rayonnement IR (8), comprenant une plaque frontale (1) avec une première (2) et une deuxième surface (3) ainsi qu'un dispositif capteur IR (4), comprenant au moins une diode électroluminescente IR (5) et un capteur IR (6) espacé de celle-ci, la au moins une diode électroluminescente IR (5) étant conçue pour émettre un rayonnement IR (7) en direction de la première surface (2) de la plaque frontale (1) et à travers celle-ci, et le capteur IR (6) étant conçu pour détecter le rayonnement IR réfléchi (8) à travers la deuxième surface (3) de la plaque frontale (1) et à travers celle-ci, ainsi qu'un dispositif d'évaluation IR qui est conçu pour évaluer le rayonnement IR réfléchi (8) afin de détecter la présence d'un objet mobile, dans lequel on utilise un capteur IR (6) qui présente une sensibilité maximale à une fréquence de travail déterminée fₒ, de telle sorte que la sensibilité est plus faible à des fréquences f supérieures ou inférieures à celle-ci, la fréquence de travail f étant la fréquence à laquelle la diode électroluminescente IR (5) émet un rayonnement infrarouge, et dans lequel on utilise comme plaque frontale (1) une vitre qui est recouverte, au moins partiellement, sur la première (2) et/ou la deuxième (3) surface de la plaque frontale (1), d'une couche de vernis céramique opaque mais perméable aux infrarouges, et dans lequel les étapes suivantes sont réalisées dans le procédé:
(a) émettre un rayonnement infrarouge (7) provenant d'au moins une diode électroluminescente infrarouge (5) en direction de la première surface (2) de la plaque frontale (1) et à travers celle-ci ;
(b) détecter le rayonnement IR réfléchi (8) par la deuxième surface (3) de la plaque frontale (1) et à travers celle-ci à l'aide du capteur IR ; et
(c) évaluer le rayonnement IR réfléchi (8) par le dispositif d'évaluation IR en vue de détecter la présence d'un objet mobile.

11. Procédé selon la revendication 10, **caractérisé en ce que** le dispositif capteur IR (4) fonctionne à plusieurs fréquences de travail f et que les signaux du capteur IR déterminés à plusieurs fréquences de travail f sont évalués en vue de déterminer la distance de l'objet mobile.

12. Procédé selon la revendication 10 ou 11, **caractérisé en ce que**, pour mesurer une distance de l'objet mobile pouvant atteindre 0,8 m à partir de la deuxième surface (3) de la plaque frontale (1), le dispositif capteur IR (4) est utilisé avec une sensibilité réduite, en faisant fonctionner le dispositif capteur IR (4) à une fréquence de travail f qui est inférieure ou supérieure de 2 à 10 % à fₒ.

13. Procédé selon l'une des revendications 10 à 12, **caractérisé en ce que**, pour déterminer la présence et, le cas échéant, la distance de l'objet mobile, on utilise le rayonnement IR (8) directement réfléchi par l'objet mobile.

14. Procédé selon l'une des revendications 10 à 13, **caractérisé en ce que**, pour déterminer la présence et, le cas échéant, la distance de l'objet mobile, on utilise le rayonnement IR (11) réfléchi indirectement par des objets immobiles (9, 10) pouvant être associés à l'objet mobile.
